# FASCICULE DE BREVET EUROPEEN

(11) **EP 3 027 447 B1**
(45) Date de publication et mention de la délivrance du brevet: **20.02.2019**
(21) Numéro de dépôt: 14736911.0
(22) Date de dépôt: 19.06.2014
(51) Int. Cl.: B60J 10/15, B60J 10/80, E05F 15/00

(54) **JOINT POUR PORTE, PORTE ET VÉHICULE AINSI ÉQUIPÉS**
DICHTUNG FÜR EINE TÜR, TÜR UND DAMIT AUSGESTATTETES FAHRZEUG
SEAL FOR A DOOR, DOOR AND VEHICLE FITTED WITH SAME

(30) Priorité: 08.07.2013 FR 1356712
(43) Date de publication de la demande: 08.06.2016
(73) Titulaire: Faiveley Transport Tours, 37700 Saint Pierre des Corps (FR)
(72) Inventeur: SALLES, Olivier, F-35133 Lecousse (FR); MORAND, Damien, F-37100 Tours (FR); MONTANIE, Thierry, F-37200 Tours (FR)
(74) Mandataire: Novagraaf Technologies
(86) Numéro de dépôt international: PCT/FR2014/051528
(87) Numéro de publication internationale: WO 2015/004356

(56) Documents cités:
- EP-A2- 1 561 623
- CH-A5- 688 354
- DE-A1-102009 041 735
- DE-U1-202006 010 582

## Description

Sont concernés un joint mâle avant pour porte, une porte d'un habitacle de véhicule et un tel véhicule, de type ferroviaire.

Dans DE102009041735 est divulgué un tel joint comprenant :
- un corps de joint intégrant une chambre :
   -- dont une paroi fait saillie dans un espace,
   -- et dans laquelle est disposé un élément commutant qui commute par déformation de la chambre,
- et un levier d'actionnement de l'élément commutant, le levier basculant par rapport au corps, y compris la chambre, dans deux directions différentes, et comprenant :
   -- sur un côté faisant face audit espace une surface adaptée pour agir sur la paroi de la chambre lors d'un basculement, et,
   -- sur un côté opposé, une protubérance qui, sous l'action d'un élément extérieur de sollicitation, fait basculer le levier.

L'élément commutant (ou organe sensible à la pression) peut être, par exemple, une bande sensible électrique, une fibre optique, une colonne d'air, etc....

Typiquement, l'objectif est alors de disposer d'un joint, notamment pour train, métro, tramway, etc. équipé d'un élément sensible ou élément commutant, qui permet d'assurer la fonction d'anti-entrainement.

La fonction anti-entrainement permet notamment d'éviter que des personnes situées sur un quai où passe le véhicule ferroviaire et coincées par la fermeture des vantaux (via un vêtement, une lanière de sac, etc.) ne soient tirées par le véhicule. Ce type d'entrainement peut en effet blesser, voire causer la mort de la personne. Un objet (ou ce que l'on peut dénommer de façon générique « élément extérieur de sollicitation ») susceptible d'agir sur le levier pour faire commuter l'élément commutant et qui est coincé dans le joint, typiquement porte fermée, à l'extérieur, peut aussi être tiré par le véhicule en mouvement, depuis l'intérieur du véhicule.

Un problème est que ces sécurités dégradent la disponibilité des véhicules en cause, du fait de la réouverture fréquente des portes (après fermetures normales), de départs de rames retardés...etc.

Une solution proposée pour concilier sécurité des personnes et meilleure disponibilité des véhicules consiste en ce que la mobilité et la conformation du levier et/ou son agencement relatif par rapport à la paroi de la chambre du joint présenté ci-avant soient tels que le basculement du levier:
- dans une première de ses directions de basculement, ne déforme pas ladite chambre, ou insuffisamment pour que l'élément commutant commute,
- et, dans la deuxième direction, déforme ladite chambre de sorte que l'élément commutant commute.

Ainsi, on ne transigera pas avec la sécurité des voyageurs, mais une activation trop facile du système anti-entrainement depuis l'intérieur de véhicule pourra être évitée.

Un tel système anti-entrainement pourra demeurer sensible pour des personnes ou objets coincés dans la porte et qui pourraient être tirés depuis l'extérieur du véhicule (danger réel). Par contre, il pourra être peu ou pas sensible pour des objets coincés dans la porte et qui seraient tirés depuis l'intérieur. Dans ce dernier cas, il peut s'agir de personnes qui se trouvent déjà dans le véhicule et ne courent alors pas le risque d'être entrainés / tirés par ce véhicule.

Pour le guidage et la tenue mécanique du levier, on conseille par ailleurs qu'il soit monté basculant vis-à-vis du corps du joint par une bande-charnière située à côté de la chambre.

Pour, suivant un autre aspect, qui peut être complémentaire de celui qui précède, différencier et/ou favoriser le basculement du levier dans un sens de celui en sens opposé, on recommande qu'à l'opposé de l'articulation du levier au corps, ledit levier soit relié audit corps par une bande de matière, de sorte que l'espace précité où fait saillie la paroi de la chambre du joint soit fermé.

Pour, suivant encore un autre aspect, qui peut être complémentaire de ceux qui précèdent, favoriser l'efficacité opérationnelle et la sécurité d'actionnement de l'élément commutant, on recommande que le corps de joint présente deux surfaces latérales d'appui :
- de préférence planes et perpendiculaires à l'axe principal du joint passant par le levier, ladite chambre, l'élément commutant qui s'y trouve et un embout de fixation du joint à un support (tel la structure de porte ou une tranche ouverte de caisse véhicule),
- et situées respectivement de part et d'autre du levier et de la chambre, et contre l'une au moins desquelles peut appuyer ledit élément extérieur de sollicitation susceptible d'agir sur le levier pour, dans ladite deuxième direction, faire commuter l'élément commutant.

Une solution avec une seule surface latérale d'appui, de préférence située à l'opposé de l'articulation/basculement du levier sur le corps, est aussi possible.

Encore pour favoriser la différentiation d'actionnement dans un sens et en sens opposé du levier, on conseille par ailleurs qu' entre l'emplacement où le levier est articulé au corps et la surface latérale d'appui la plus proche, le corps du joint soit massif et dépourvu de chambre susceptible d'être déformée par le levier et donc de faire ainsi commuter l'élément commutant lors d'un basculement du levier dans la première direction.

Pour rendre favorablement opérationnel le joint mâle avant présenté ci-avant, on recommande par ailleurs la réalisation d'un ensemble de joints comprenant :
- ce joint mâle, et
- un joint femelle avant présentant un creux où s'étend la protubérance et où elle est mobile dans lesdites directions.

Concernant la porte d'habitacle du véhicule, on conseille:
- que l'habitacle présente un côté intérieur où des passagers sont reçus dans l'habitacle et un côté extérieur:
- et que la porte soit :
   -- mobile entre des positions respectivement ouverte et fermée qui, respectivement, autorise et interdit un accès au-delà de cette porte, vers l'intérieur, dans l'habitacle, et vers l'extérieur,
   -- soit pourvue du joint mâle avant précité, avec tout ou partie de ses caractéristiques, comme ci-avant pour l'ensemble présenté.
   -- et présente un bord le long duquel s'étendra le joint mâle avant qui, en position fermée, s'engagera alors dans un creux d'un joint femelle avant.

Sur cette porte, encore pour guider et favoriser le basculement dans un sens, il est par ailleurs conseillé que le levier soit monté basculant vis-à-vis du corps en une zone située plus près du côté intérieur de l'habitacle que ne l'est ladite surface qui agit sur la paroi de la chambre, de sorte que l'élément extérieur de sollicitation, retenu côté intérieur et tiré côté extérieur après être passé entre le levier et fond dudit creux, fasse basculer le levier vers l'élément commutant.

Concernant maintenant le véhicule, on recommande qu'il comprenne :
- une caisse entourant un habitacle présentant un côté intérieur où des passagers sont reçus dans l'habitacle et un côté extérieur, la caisse présentant au moins une ouverture pour accéder à l'habitacle et en sortir, et,
- une porte mobile entre des positions respectivement ouverte et fermée qui, respectivement, autorise et interdit le passage par l'ouverture,
- la caisse et la porte recevant, fixés à eux le long de bords respectifs pouvant se faire face, l'un le joint mâle avant selon tout ou partie de ses caractéristiques, l'autre un joint femelle avant présentant un creux où s'engage au moins le levier du joint mâle, en position fermée de la porte.

D'autres caractéristiques et/ou des détails relatifs à ce qui précède sont encore fournis ci-après, en référence aux dessins annexés où est illustré au moins un mode de réalisation notamment d'un dit joint mâle, à titre d'exemple préféré.

Dans ces dessins :
- la figure 1 montre un ensemble de joints mâle et femelle en vue de dessus ; le joint mâle est au repos,
- la figure 2 montre, en coupe, cet ensemble monté sur (et entre) une porte coulissante et une caisse, suivant un plan de coupe P repéré figure 4, dans l'hypothèse où on aurait remplacé les deux vantaux illustrés figure 4 par un seul, s'ouvrant et se fermant par un mouvement horizontal (coulissant ou louvoyant-coulissant), comme illustré et décrit ci-après, étant précisé que, sur la figure 1, le levier est dépourvu de bande de matière (27 ci-après) de liaison au corps du joint,
- la figure 3 montre le joint mâle basculé de telle sorte qu'il active l'élément commutant,
- la figure 4 schématise une voiture avec deux portes coulissantes (fermées) et un ou plusieurs ensembles de tels joints,
- les figures 5,6 schématisent des sollicitations du joint mâle conduisant respectivement à une activation et une non-activation de l'élément commutant plan de coupe P),
- les figures 7,8,9 d'une part et 10,11,12 d'autre part, correspondent, pour chaque groupe, aux figures 1,5,6, suivant respectivement un deuxième et un troisième modes de réalisation,
- et la figure13 correspond à un autre mode de réalisation.

Sur ces figures est présenté un joint mâle avant 1.

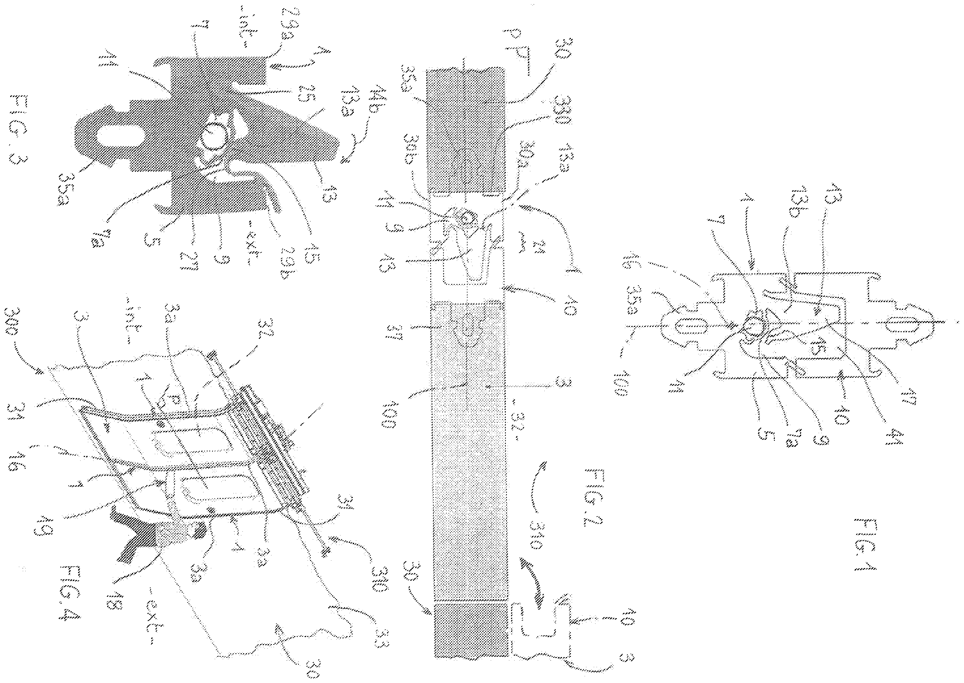

Il s'agit d'un joint avant, dans le sens où il peut être fixé le long d'un bord avant (s'élevant vers le haut) 3a d'une porte 3 ou d'une caisse 30 de véhicule de type ferroviaire, comme schématisé figure 4..

Le véhicule 300 est de préférence ferroviaire en ce qu'il circule sur au moins un rail, avec ou sans pneu. Il peut notamment s'agir d'un métro, train, tramway.

Le joint 1 est un joint pour porte, dans le sens où il peut être fixé à la porte 3, ou l'être fixé à la caisse 30, le long d'un bord 31 d'une ouverture 32 prévue à travers une paroi 33 de cette caisse.

Typiquement, l'ouverture 32 définira un passage d'accès à l'intérieur d'un compartiment ou d'une voiture du véhicule 300, et/ou de sortie de celui-ci.

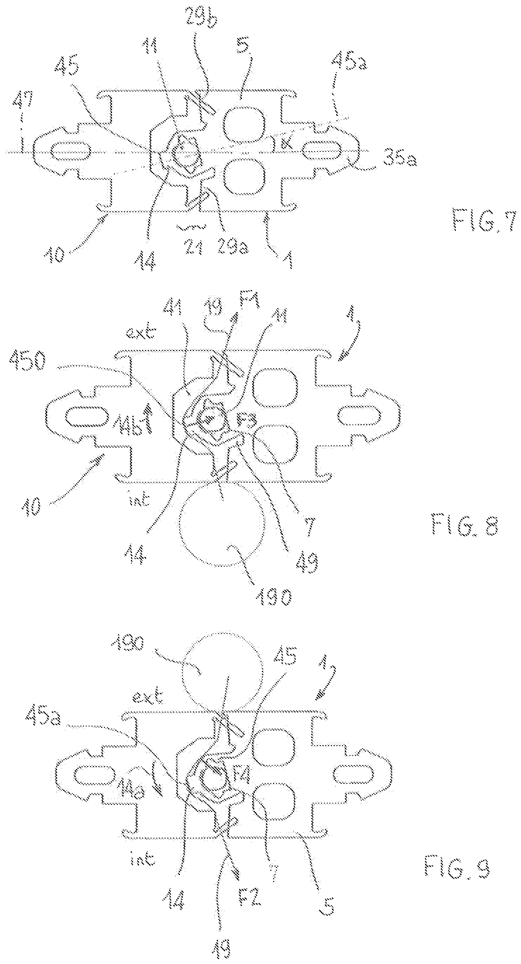

Et il s'agit d'un joint mâle dans le sens où il comprend, figures 1-3, 5-6, un élément saillant d'actionnement de l'élément commutant 11, ici le levier 13, ou encore l'excroissance 45 figures 7-12.

Dans les deux cas, on conseille qu'il coopère avec un joint femelle 10 fixé, suivant le cas, à la caisse 30 ou à la porte 3.

Le joint 10 est femelle en ce qu'il présente un creux 41 où, en position fermée de la porte 3, s'engage une partie du joint mâle 1, typiquement le levier 13, ou l'excroissance 45.

Le joint mâle 1 comprend :
- un corps 5 de joint intégrant une chambre 7 :
   -- dont une paroi 7a fait saillie dans un espace 9,
   -- et dans laquelle est disposé un élément commutant 11 (ou un organe sensible à la pression) qui commute par déformation de la chambre,
- et un levier 13 d'actionnement de l'élément commutant 11 (version des figures 1-3, 5-6).

L'élément commutant 11 peut être une bande sensible électrique, une fibre optique ou, une colonne d'air, un élément piézoélectrique....etc.

Il est important de noter que le levier 13 n'est pas une lèvre d'étanchéité, à la différence de la lèvre basculante 50 des publications EP1561623 et DE202004014861.

Le levier 13 peut basculer par rapport au corps 5, y compris la chambre 7, dans deux directions différentes.

Dans la version préférée illustrée ces deux directions, respectivement 14a,14b (figures 3,5,6), définissant une possibilité de rotation ou articulation dans un même plan contenant l'élément commutant 11 et perpendiculaire à l'axe 16 suivant lequel le joint 1 s'étend le long de la caisse 30 (paroi 33) ou de la porte 3 ; cf. figure 1,4,6.

Le levier 13 comprend :
- sur un côté 13a faisant face à l'espace 9 une surface 15 adaptée pour agir sur la paroi 7a de la chambre lors d'un basculement, et,
- sur un côté opposé 13b, une protubérance 17 qui, sous l'action d'un élément extérieur de sollicitation 19, fait basculer le levier 13.

Typiquement, l'élément 19 extérieur de sollicitation pourra être, comme illustré, une sangle de sac 190, le sac se trouvant à l'intérieur de la caisse 30 du véhicule qui, typiquement, pourra définir un compartiment voyageurs de métro, train, tramway... en circulation, alors même que cette sangle dépasse hors du véhicule (de la porte), à travers l'espace 21 inter-joints (entre les joints respectivement mâle 1 et femelle 10), porte 3 fermée .

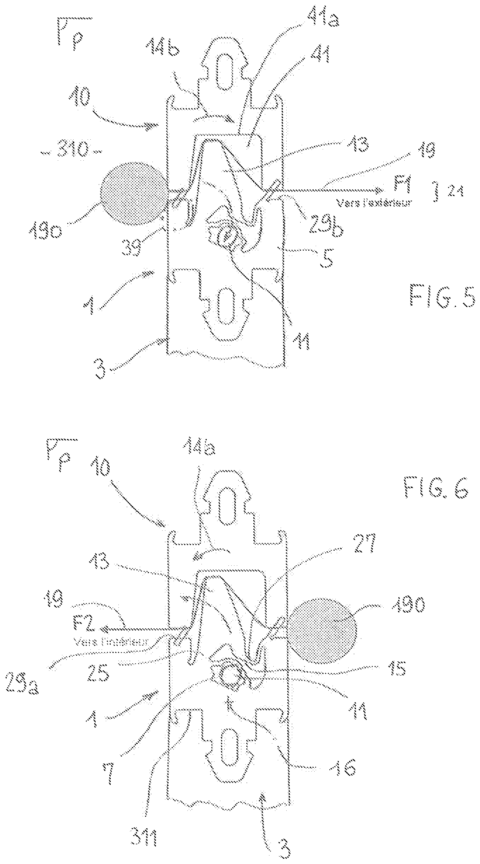

Figure 4, cet espace intérieur (intérieur du volume entouré par la caisse 30) est repéré « int ». L'extérieur est repéré « ext ». Voir également figure 3 et 7-12, ainsi que les mentions « vers l'extérieur » figures 5,6. Le volume entouré par la caisse 30 peut définir un habitacle 310 à l'intérieur duquel des passagers sont reçus (cf. figure 2, notamment).

Pour assurer la fonction d'anti-entrainement (notamment éviter que le véhicule en mouvement traîne en particulier une personne 18 située à l'extérieur du véhicule (figure 4) - typiquement ici de la caisse 30 - avec l'élément 19 - la sangle de sac dans l'exemple - coincé dans le véhicule, par exemple dans l'espace 21 inter-joints, tout en permettant une bonne disponibilité des véhicules (évitant qu'ils soient excessivement bloqués dans leur circulation), il est prévu ici que la mobilité et la conformation du levier 13 et/ou son agencement relatif par rapport à la paroi 7a de la chambre 7 du joint présenté ci-avant soient tels que le basculement du levier:
- dans la première direction 14a de ses directions de basculement, ne déforme pas ladite chambre, ou insuffisamment pour que l'élément commutant 11 commute (figure 6),
- et, dans la deuxième direction 14b, déforme ladite chambre de sorte que l'élément commutant 11 commute (figures 3, 5).

La première direction 14a va de l'extérieur vers l'intérieur, la deuxième direction 14b va de l'intérieur vers l'extérieur.

Si, donc, on tire sur l'élément 19 en place comme figures 5,6 :
- de l'intérieur vers l'extérieur, le levier 13 va basculer dans la deuxième direction 14b et, sous sa sollicitation (son appui contre la paroi 7a), l'élément commutant 11 commute (cf. figure 5 puis 3),
- de l'extérieur vers l'intérieur, le levier 13 est sollicité dans la première direction 14a, ce qui le fait basculer dans une direction telle qu'il ne peut pas solliciter l'élément commutant 11 ou ce qui ne le fait pas ou insuffisamment basculer pour solliciter suffisamment l'élément commutant 11. L'élément commutant 11 ne commute alors pas (cf figure 6).

En place comme figures 5,6, l'élément 19 (tel une lanière) est coincé d'un côté part le bloc 190 (tel un sac) et passe du côté opposé, via l'espace 21, le long d'abord de l'une des surfaces latérales (telle 29a), puis autour du levier 13 (sur lequel il appuie si on tire suivant F1 ou F2), ensuite le long de l'autre surface latérales (telle 29b). Les forces de traction F1, F2 sont transversales aux axes 16 et 100. Le levier 13 s'étend dans le creux 41 au-delà du niveau des surfaces latérales 29a,29b.

Le levier 13 est monté basculant vis-à-vis du corps 5 du joint par une bande-charnière 25 située à côté de la chambre 7, figures 3,6.

L'articulation au corps du levier, ici la bande-charnière 25, est située plus près de l'intérieur de la caisse 30 que de l'extérieur.

Cette articulation, ou ce basculement, s'opère sensiblement autour d'un axe virtuel de basculement 13a sensiblement parallèle aux côtés respectivement intérieur 30a et extérieur 30b, eux-mêmes sensiblement parallèles entre eux ; figure 2.

Pour, suivant un autre aspect, qui peut être complémentaire de celui qui précède, différencier et/ou favoriser le basculement du levier dans un sens (14b ci-avant) par rapport à celui en sens opposé, on peut prévoir qu'à l'opposé de l'articulation du levier au corps 5, ledit levier soit relié au corps 5 par une bande 27 de matière, de sorte que l'espace 9 où fait saillie la paroi 7a de la chambre du joint soit fermé ; voir figure 3.

A noter toutefois que l'on pourrait se dispenser de cette bande de matière 27, comme montré figure 1, pour rendre plus sensible le basculement. L'absence de la bande de matière (au-delà de la surface 15) peut faciliter le choix de la forme de la surface 15, sur une telle géométrie de joint asymétrique.

Pour notamment favoriser l'efficacité opérationnelle et la sécurité d'actionnement de l'élément commutant 11, on voit sur les figures (sauf figure 4) que le corps 5 de joint présente deux surfaces latérales d'appui 29a,29b.

Comme schématisé figures 1,2,3 considérées ensemble, ces surfaces sont chacune de préférence planes et perpendiculaires à l'axe principal 100 du joint passant par le levier 13, la chambre 9, l'élément commutant 11 qui s'y trouve et un embout 35a de fixation du joint à un support (tel la structure 37 de la porte 3, ou une tranche de la caisse 30 du véhicule). L'embout 35a peut typiquement être fixé par engagement élastique à force dans une rainure.

Les surfaces latérales d'appui 29a,29b sont situées respectivement de part et d'autre du levier 13 et de la chambre 9.

Elles sont conformées et situées de telle sorte que l'élément de sollicitation 19 peut appuyer contre au moins l'une d'elles afin d'agir alors sur le levier 13.

Comme déjà mentionné, il pourra être utile, pour favoriser la différentiation d'actionnement dans un sens et en sens opposé du levier 13, qu'entre l'emplacement où le levier est articulé au corps (zone 25 ci-avant) et la surface latérale 29a d'appui la plus proche (donc dans la zone 39 figure 5), le corps du joint soit massif et dépourvu de chambre susceptible d'être déformée par le levier et donc de faire ainsi commuter l'élément commutant lors d'un basculement du levier dans la première direction.

Pour rendre opérationnel le joint mâle 1, on a prévu de lui associer un joint femelle 10.

L'ensemble joint mâle 1 et joint femelle 10 sera favorablement tel que le joint femelle présentera un creux 41 (figures 1, 5) où s'étendra la protubérance 17 et où donc le levier 13 sera mobile dans lesdites directions 14a, 14b.

Concernant la porte 3 d'habitacle du véhicule 300, il est prévu favorablement qu'elle:
- soit mobile entre des positions respectivement ouverte et fermée qui, respectivement, autorise et interdit un accès au-delà de cette porte, vers l'intérieur, dans l'habitacle 310, et vers l'extérieur,
- soit pourvue du joint mâle 1,
- et présente un bord 311 le long duquel s'étendra le joint mâle avant qui, en position fermée de la porte, s'engagera alors dans le creux 41 du joint femelle avant 10, comme schématisé figures 5,6.

Figure 2, la porte 3 est montrée dans ses positions respectivement fermée (entre les deux parties illustrées de la caisse 30 et alignée avec elles ici) et ouverte (à droite, décalée), étant précisé que sur cette figure c'est la porte 3 qui est équipée du joint femelle 10 et la caisse 3 du joint mâle 1. Sur cette figure, la porte a par commodité été représentée, ouverte, du côté intérieur de la voiture. Typiquement, ouverte, elle sera toutefois préférentiellement du côté extérieur de la voiture (de la caisse).

Sur la porte 3, encore pour guider et favoriser le basculement dans un sens, il est par ailleurs conseillé, compte tenu de ce qui a été indiqué avant, que le levier 13 soit (comme illustré figures 5, 6) monté basculant vis-à-vis du corps 5 en une zone située plus près du côté intérieur de l'habitacle 310 que ne l'est la surface 15 qui agit sur la paroi 7a de la chambre 7, de sorte que l'élément 19 de sollicitation, retenu côté intérieur (bloc 190), sortant par 21 et tiré côté extérieur (force F figure 5)après être passé entre le levier et fond 41a du creux 41, fasse basculer le levier 13 vers l'élément commutant 11.

Concernant maintenant le véhicule 300 dans son ensemble, on recommande qu'il comprenne, en tenant à nouveau compte de ce qui précède :
- la caisse 30 entourant l'habitacle 310 et présentant l'ouverture 32 permettant ici d'accéder à l'habitacle et d'en sortir, et,
- la porte 30 mobile donc entre ses positions ouverte et fermée qui, respectivement, autorise et interdit le passage par l'ouverture.

La caisse et la porte reçoivent, fixés à elles le long de bords respectifs pouvant se faire face (330 figure 2, 311 figure 6, pour l'un de ces bords suivant deux montages) :
- l'un le joint mâle avant 1,
- l'autre le joint femelle 10 coopérant, ce dernier présentant donc le creux 41 où doit s'engager le levier 13 du joint mâle, en position fermée de la porte.

Figure 7 et suivantes, on retrouve un joint mâle 1 et un joint femelle 10.

Le joint mâle avant 1 pour porte comprend le corps 5 de joint qui se prolonge :
- sur un côté, par l'embout 35 de fixation à un support (tel la porte mobile 3 ou la caisse 30), et
- sur un côté opposé, par une excroissance 45 logeant la chambre 7 dans laquelle est disposé l'élément commutant (ou un organe sensible à la pression / capteur) 11 qui commute par déformation de la chambre.

Le corps 5 présente un axe principal 47 (figure 7) passant sensiblement par la chambre 7 et l'embout de fixation 35a. Il est pourvu des deux surfaces latérales d'appui 29a,29b situées respectivement de part et d'autre de l'excroissance 45 et de la chambre, et contre l'une au moins desquelles peut appuyer l'élément extérieur de sollicitation 19/190, dans les mêmes conditions que précédemment, à savoir :
- passant d'un côté (intérieur/extérieur) à l'autre du joint,
- soumis à une traction (F1/F2) depuis l'un de ces côtés,
- et susceptible d'agir sur un bout libre 45a de l'excroissance pour faire commuter l'élément commutant 11 par appui contre ledit bout.

L'excroissance 45 présente un axe central d'activation passant par ledit bout libre, caractérisé en ce que l'axe central d'activation 45a (figure 7) qui s'étend de biais par rapport à l'axe principal 47 du corps, de sorte que cet axe central d'activation est naturellement incliné davantage vers l'une des surfaces latérales d'appui que vers l'autre.

Sur les figures 7 et suivantes concernées, l'axe central d'activation 45a est ainsi naturellement incliné davantage vers la surface latérale d'appui 29a (côté intérieur du joint placé vers l'habitacle 310) que vers l'autre 29b (côté extérieur).

Le bout libre 451 de l'excroissance 45 présente une surface plane 450 d'appui pour l'élément 19 de sollicitation, cette surface plane s'étendant de biais par rapport à l'axe principal 47 du corps et perpendiculairement à l'axe central d'activation45a passant par ledit bout libre.

Comme ci-avant est également alors concerné un véhicule comprenant :
- une caisse entourant un habitacle présentant un côté intérieur où des passagers sont reçus dans l'habitacle et un côté extérieur, la caisse présentant au moins une ouverture pour accéder à l'habitacle et en sortir, et,
- une porte mobile entre des positions respectivement ouverte et fermée qui, respectivement, autorise et interdit le passage par l'ouverture,
- la caisse et la porte recevant, fixés à elles le long de bords respectifs pouvant se faire face, l'une le joint mâle avant précité, l'autre un joint femelle avant présentant un creux où s'engage au moins l'excroissance du joint mâle, en position fermée de la porte.

A noter que, de préférence, d'un côté, entre l'excroissance 45 et l'une des deux surfaces latérales d'appui 29a,29b, le corps 5 présentera une fente d'aisance 49 favorisant l'inclinaison de l'excroissance, dans un sens (ici vers l'intérieur, côté habitacle 310 de la caisse).

Comme précédemment le joint 1 coopère avec un joint femelle 10. Son excroissance 45 s'étend ainsi naturellement dans le creux 41 de ce joint femelle.

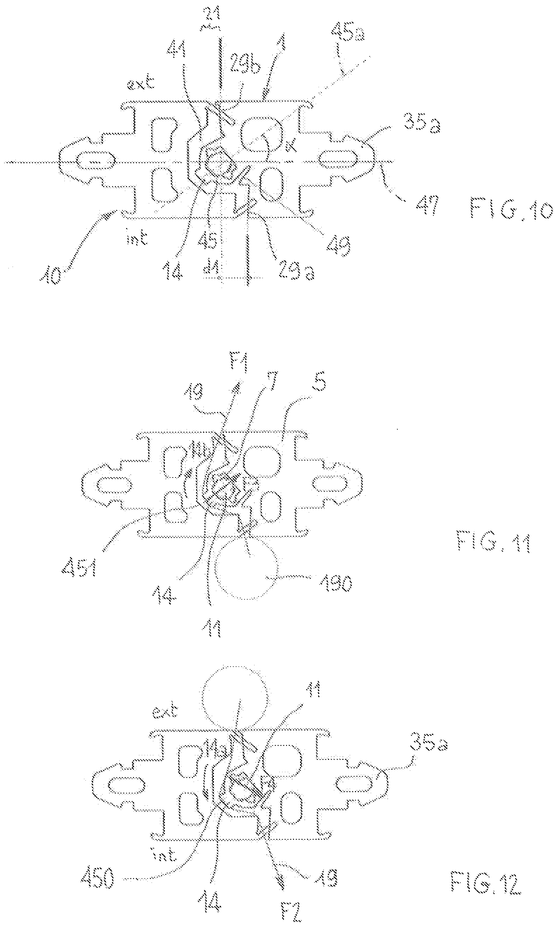

Le principe des solutions figure 7 et suivantes est l'utilisation d'une géométrie de joint avant 1 équipé d'un élément commutant 11, telle que :
- le fait de tirer de l'extérieur un obstacle (19/190) coincé (figures 8, 11) crée une force F3 sur l'élément commutant principalement suivant son axe principal 45a qui devient donc son axe d'activation (flèche 14b figure 8), et
- le fait de tirer de l'intérieur le même obstacle coincé crée une force F4 sur l'élément commutant 11 principalement sur sa paroi latérale (flèche 14a figure 9) ; l'axe ne permet alors pas la commutation.

Figures 10-12, l'angle alpha entre 45a et 47 est plus marqué que dans la solution des figures 7-9.

Et les surfaces latérales 29a,29b, perpendiculaires à l'axe 47, sont décalées d'une distance d1 suivant cet axe, l'une par rapport à l'autre (cf. figure 10), de telle sorte que la paroi latérale extérieure du joint est plus courte côté intérieur que côté extérieur, donc l'excroissance y est davantage en saillie par rapport au reste du corps 5, ce qui :
- accentue la tendance au basculement d'activation (sens 14b) si on tire sur 19 côté extérieur (figure 11), et ce d'autant plus avec la fente d'aisance 49 située entre 45 et 29a,
- et rend le basculement en sens inverse plus difficile (figure 12, sens 14a).

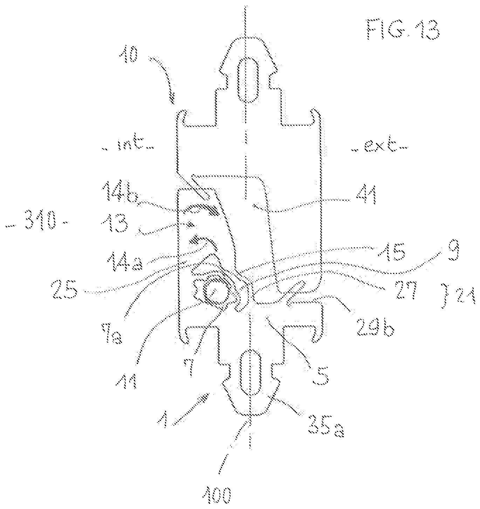

Figure 13, est illustrée une variante où on retrouve, comme repéré et illustré, nombre des caractéristiques de la solution des figures 1 à 6.

Ainsi, on retrouve, sur le joint mâle 1 illustré : le corps 5 de joint intégrant la chambre 7, la paroi 7a qui fait saillie dans l'espace 9, l'élément commutant 11, le levier 13 d'actionnement (sens 14a,14b), l'éventuelle bande 27, le joint femelle 10 avec son creux 41, les embouts de fixation desdits joints 1, 10 (dont l'embout 35), la fente inter-joints 21 et la bande-charnière 25 située à côté de la chambre 7.

A noter que dans cette variante, seule demeure l'une des deux surfaces latérales d'appui, à savoir celle 29b, côté extérieur.

Cette surface latérale d'appui 29b sera de préférence située au niveau de l'élément commutant 11, à côté de la chambre 7, plus bas que la bande-charnière 25 située du côté opposé.

Ainsi, la fente inter-joints 21 (et donc la forme de l'élément 19 y passant) sera ici sensiblement en « S », à comparer à la forme sensiblement en oméga de la version des figures 1-6.

## Revendications

1. Joint mâle avant pour porte, le joint comprenant :
- un corps (5) de joint intégrant une chambre (7) :
-- dont une paroi (7a) fait saillie dans un espace,
-- et dans laquelle est disposé un élément commutant (11) qui commute par déformation de la chambre,
- et un levier (13) d'actionnement de l'élément commutant, le levier basculant par rapport au corps, y compris la chambre, dans deux directions différentes, et comprenant :
-- sur un côté faisant face audit espace une surface (15) adaptée pour agir sur la paroi de la chambre lors d'un basculement, et,
-- sur un côté opposé, une protubérance (17) qui, sous l'action d'un élément extérieur de sollicitation, fait basculer le levier,
**caractérisé en ce que** le levier (13) est agencé de sorte qu'un basculement du levier:
- dans une première desdites directions, ne déforme pas la chambre (7), ou insuffisamment pour que l'élément commutant (11) commute,
- et, dans la deuxième direction, déforme ladite chambre de sorte que l'élément commutant commute.

2. Joint mâle selon la revendication 1, où le levier est monté basculant vis-à-vis du corps du joint par une bande-charnière (25) située à côté de la chambre.

3. Joint mâle selon la revendication 1 ou 2, où, à l'opposé de l'articulation du levier au corps, le levier est relié audit corps par une bande de matière (27), de sorte que ledit espace où fait saillie ladite paroi de la chambre est fermé.

4. Joint mâle selon l'une des revendications 1 à 3, où le corps de joint présente une surface latérale d'appui (29b) ou deux surfaces latérales d'appui (29a,29b), situées alors respectivement de part et d'autre du levier et de la chambre, et contre l'une au moins desquelles peut appuyer ledit élément extérieur de sollicitation (19) susceptible d'agir sur le levier pour, dans ladite deuxième direction, faire commuter l'élément commutant.

5. Joint mâle selon la revendication 4, où, entre l'emplacement où le levier est articulé au corps (5) et la surface latérale d'appui la plus proche, le corps du joint est massif, dépourvu de chambre susceptible d'être déformée par le levier et donc de faire ainsi commuter l'élément commutant (11) lors d'un basculement du levier dans la première direction.

6. Ensemble de joints **caractérisé en ce qu'**il comprend :
- le joint mâle avant (1) selon l'une des revendications 1 à 5, et
- un joint femelle avant (10) présentant un creux (41) agencé de sorte à recevoir ledit levier mobile dans lesdites directions.

7. Porte d'un habitacle de véhicule, l'habitacle présentant un côté intérieur où des passagers sont reçus dans l'habitacle et un côté extérieur, la porte:
- étant mobile entre des positions respectivement ouverte et fermée qui, respectivement, autorise et interdit un accès au-delà de cette porte, vers l'intérieur, dans l'habitacle et vers l'extérieur,
- étant pourvue du joint mâle avant (1) selon l'une des revendications 1 à 5 et/ou de l'ensemble de joints (1,10) selon la revendication 6, et,
- présentant un bord le long duquel s'étend le joint mâle avant qui, en position fermée, s'engage dans un creux (41) d'un joint femelle avant (10).

8. Porte comprenant l'ensemble de joints selon l'une des revendications 7 rattachée à la revendication 4 ou 5, où le levier (13) est monté basculant vis-à-vis du corps (5) en une zone située plus près du côté intérieur de l'habitacle que ne l'est ladite surface qui agit sur la paroi de la chambre, de sorte que l'élément extérieur de sollicitation, retenu côté intérieur et tiré côté extérieur après être passé entre le levier et fond dudit creux, fait basculer le levier vers l'élément commutant.

9. Véhicule comprenant :
- une caisse (30) entourant un habitacle présentant un côté intérieur où des passagers sont reçus dans l'habitacle et un côté extérieur, la caisse présentant au moins une ouverture pour accéder à l'habitacle et en sortir, et,
- une porte (3) mobile entre des positions respectivement ouverte et fermée qui, respectivement, autorise et interdit le passage par l'ouverture,
la caisse et la porte recevant, fixés à eux le long de bords respectifs pouvant se faire face, l'un le joint mâle avant (1) selon l'une des revendications 1 à 5, l'autre un joint femelle avant (10) présentant un creux (41) où s'engage au moins le levier (13) du joint mâle, en position fermée de la porte.

## Patentansprüche

1. Vordere Einsteckdichtung für Tür, wobei die Dichtung, aufweist:
- einen Dichtungskörper (5), welcher eine Kammer (7) integriert:
-- von welcher eine Wand (7a) in einem Raum vorragt,
-- und in welcher ein Schaltelement (11), welches durch Verformung der Kammer schaltet,
- und ein Hebel (13) zur Betätigung des Schaltelements angeordnet ist, wobei der Hebel in Bezug auf den Körper einschließlich der Kammer in zwei verschiedene Richtungen kippt und aufweist:
-- auf der einen, dem Raum gegenüber liegenden Seite eine Oberfläche (15), welche dafür angepasst ist, um bei einem Kippen auf die Wand der Kammer einzuwirken, und
-- auf einer gegenüber liegenden Seite eine Ausstülpung (17), welche unter der Einwirkung eines äußeren Belastungselements den Hebel kippen lässt, **dadurch gekennzeichnet, dass** der Hebel (13) derartig angeordnet ist, dass ein Kippen des Hebels:
- in einer ersten der Richtungen die Kammer (7) nicht verformt oder unwesentlich, damit das Schaltelement (11) schaltet,
- und in der zweiten Richtung die Kammer derartig verformt, dass das Schaltelement schaltet.

2. Einsteckdichtung nach Anspruch 1, bei welcher der Hebel kippend gegenüber dem Dichtungskörper durch ein Scharnierband (25) montiert ist, welches sich an der Seite des Raums befindet.

3. Einsteckdichtung nach Anspruch 1 oder 2, bei welcher gegenüber der Anlenkung des Hebels an den Körper der Hebel durch ein Materialband (27) mit dem Körper derartig verbunden ist, dass der Raum, in welchem die Wand der Kammer vorragt, geschlossen ist.

4. Einsteckdichtung nach einem der Ansprüche 1 bis 3, bei welcher der Dichtungskörper eine seitliche Stützfläche (29b) oder zwei seitliche Stützflächen (29a, 29b) aufweist, welche sich dann jeweils beiderseits des Hebels und der Kammer befinden und gegen welche mindestens eine von ihnen sich das äußere Belastungselement (19) abstützen kann, welches geeignet ist, um auf den Hebel einzuwirken, um in der zweiten Richtung das Schaltelement schalten zu lassen.

5. Einsteckdichtung nach Anspruch 4, bei welcher zwischen der Stelle, an welcher der Hebel an den Körper (5) angelenkt ist, und der nächstgelegenen seitlichen Stützfläche, der Körper der Dichtung massiv ist, ohne Kammer, und geeignet, von dem Hebel verformt zu werden und so somit das Schaltelement (11) bei einem Kippen des Hebels in der ersten Richtung schalten zu lassen.

6. Dichtungsbaugruppe, **dadurch gekennzeichnet, dass** sie aufweist:
- die Einsteckdichtung (1) nach einem der Ansprüche 1 bis 5 und
- eine vordere Aufnahmedichtung (10), welche einen Hohlraum (41) aufweist, welcher derartig angeordnet ist, um den in den Richtungen mobilen Hebel aufzunehmen.

7. Tür eines Kraftfahrzeugfahrgastraums, wobei der Fahrgastraum eine Innenseite aufweist, an welcher Fahrgäste im Fahrgastraum aufgenommen werden, und eine Außenseite, wobei die Tür:
- zwischen jeweils einer offenen und geschlossenen Position beweglich ist, welche jeweils den Zugang über die Tür in Richtung des Inneren in den Fahrgastraum und in Richtung des Außenbereichs ermöglicht oder verhindert,
- mit der vorderen Einsteckdichtung (1) nach einem der Ansprüche 1 bis 5 und/oder der Dichtungsbaugruppe (1,10) nach Anspruch 6 versehen ist und
- eine Kante aufweist, entlang welcher sich die vordere Einsteckdichtung erstreckt, welche in geschlossener Position in einen Hohlraum (41) einer vorderen Aufnahmedichtung (10) eingreift.

8. Tür, aufweisend die Dichtungsbaugruppe nach einem der Ansprüche 7 in Kombination mit Anspruch 4 oder 5, bei welcher der Hebel (13) kippend gegenüber dem Körper (5) in einem Bereich montiert ist, welcher sich näher an der Innenseite des Fahrgastraums als die Oberfläche, welche auf die Wand der Kammer einwirkt, befindet, so dass das äußere Belastungselement, welches an der Innenseite zurückgehalten und nach außen gezogen wird, nachdem es zwischen den Hebel und Boden des Hohlraums geführt ist, den Hebel in Richtung auf das Schaltelement kippt.

9. Fahrzeug, aufweisend:
- eine Karosserie (30), welche einen Fahrgastraum umgibt, welcher eine Innenseite, an welcher Fahrgäste im Fahrgastraum aufgenommen werden, und eine Außenseite aufweist, wobei die Karosserie mindestens eine Öffnung aufweist, um in den Fahrgastraum zu gelangen und ihn zu verlassen, und
- eine Tür (3), welche zwischen jeweils einer offenen und geschlossenen Position beweglich ist, welche jeweils Durchgang durch die Öffnung ermöglicht und verhindert,
wobei die Karosserie und die Tür jeweils die vordere Einsteckdichtung (1) nach einem der Ansprüche 1 bis 5 und eine vordere Aufnahmedichtung (10) aufnehmen, welche einen Hohlraum (41) aufweist, in welchen zumindest der Hebel (13) der Einsteckdichtung in geschlossener Position der Tür eingreift, wobei die Dichtungen an Karosserie und Tür entlang jeweiliger Kanten, welche sich gegenüber stehen können, befestigt sind.

## Claims

1. Front male seal for a door, the seal comprising:
- a seal body (5) integrating a chamber (7):
-- a wall (7a) of which projects into a space,
-- and in which a switching-over element (11) that switches over by deforming the chamber is disposed,
- and a lever (13) for actuating the switching-over element, the lever tilting with respect to the body, including the chamber, in two different directions, and comprising:
-- on a side facing said space, a surface (15) suitable for acting on the wall of the chamber during tilting, and
-- on an opposite side, a protuberance (17) which, under the action of an external activation element, rocks the lever,
**characterised in that** the lever (13) is arranged so that a tilting of the lever:
- in a first of said tilting directions, does not deform said chamber (7), or insufficiently for the switching-over element (11) to switch over,
- and, in the second direction, deforms said chamber so that the switching-over element switches over.

2. Male seal according to claim 1, where the lever is mounted so as to be able to tilt vis-à-vis the body of the seal by means of a hinge strip (25) situated alongside the chamber.

3. Male seal according to claim 1 or 2, where, opposite the articulation of the lever on the body, the lever is connected to said body by a strip of material (27), so that said space where said wall of the chamber projects is closed.

4. Male seal according to one of claims 1 to 3, where the body of the seal has a lateral bearing surface (29b) or two lateral bearing surfaces (29a, 29b), then situated respectively on either side of the lever and chamber, and against at least one of which said external actuation element (19) can bear, able to act on the lever in order, in said second direction, to make the switching-over element switch over.

5. Male seal according to claim 4, where, between the point where the lever is articulated on the body (5) and the closest lateral bearing surface, the body of the seal is solid and devoid of any chamber able to be deformed by the lever and therefore to make the switching-over element (11) switch over when the lever tilts in the first direction.

6. Set of seals, **characterised in that** it comprises:
- the front male seal (1) according to one of claims 1 to 5, and
- a front female seal (10) having a hollow (41) arranged so as to receive said movable lever in said directions.

7. Door for the passenger compartment of a vehicle, the passenger compartment having an inside where passengers are received in the passenger compartment and an outside, the door:
- being able to move between positions respectively open and closed which, respectively, allow and prevent access beyond this door, to the inside, in the passenger compartment and to the outside,
- being provided with the aforementioned front male seal (1) according to one of claims 1 to 5 and/or the set of seals (1, 10) according to claim 6, and,
- having an edge along which the front male seal extends which, in the closed position, engages in a hollow (41) of a front female seal (10).

8. Door comprising the set of seals according to one of claims 7 attached to claim 4 or 5, where the lever (13) is mounted so as to be able to tilt vis-à-vis the body (5) in a zone situated closer to the inside of the passenger compartment than is said surface that acts on the wall of the chamber, so that the external actuation element, held on the inside and pulled on the outside after having passed between the lever and bottom of said hollow, makes the lever tilt towards the switching-over element.

9. Vehicle comprising:
- a body (30) surrounding a passenger compartment having an inside where passengers are received in the passenger compartment and an outside, the body having at least one opening for accessing the passenger compartment and leaving same, and
- a door (3) able to move between respectively open and closed positions and which, respectively, allow and prevent passage through the opening,
the body and the door receiving, fixed to them along respective edges that may face each other, in one case the front male seal (1) according to one of claims 1 to 5, the other a front female seal (10) having a hollow (41) where at least the lever (13) of the male seal engages, in the closed position of the door.
